# EUROPEAN PATENT APPLICATION

(11) **EP 4 592 814 A1**
(43) Date of publication of application: **30.07.2025**
(21) Application number: 25152289.2
(22) Date of filing: 16.01.2025
(51) Int. Cl.: G06F 3/12

(54) **IMAGE FORMING SYSTEM AND INFORMATION PROCESSING METHOD CAPABLE OF EXECUTING PRINT JOB HELD IN PRINT SERVER**

(30) Priority: 23.01.2024 JP 2024007889
(71) Applicant: KYOCERA Document Solutions Inc., Osaka-shi, Osaka, 540-8585 (JP)
(72) Inventor: Ohara, Ikuya, Osaka-shi, 540-8585 (JP)
(74) Representative: Plougmann Vingtoft a/s

(57) **Abstract**

An image forming system (100) includes an image forming apparatus (3), a login processing portion (81), a reception processing portion (73), and an association processing portion (82). The image forming apparatus (3) executes a print job held in a print server (2) and associated with a first user of the print server (2). The login processing portion (81) causes a second user of the image forming apparatus (3) to log in the image forming apparatus (3). The reception processing portion (73) receives an input operation of inputting account information of the first user while the second user is logged in. The association processing portion (82) associates the first user corresponding to the input account information with the second user logged in the image forming apparatus (3).

## Description

### BACKGROUND

The present disclosure relates to an image forming system and an information processing method.

An image forming apparatus capable of causing a display portion to display a print job of a user who has logged in the image forming apparatus as an execution target candidate among print jobs held in a print server is known as a related art.

### SUMMARY

An image forming system according to an aspect of the present disclosure includes an image forming apparatus, a login processing portion, a reception processing portion, and an association processing portion. The image forming apparatus executes a print job held in a print server and associated with a first user of the print server. The login processing portion causes a second user of the image forming apparatus to log in the image forming apparatus. The reception processing portion receives an input operation of inputting account information of the first user while the second user is logged in the image forming apparatus. The association processing portion associates the first user corresponding to the account information input by the input operation with the second user logged in the image forming apparatus.

An information processing method according to another aspect of the present disclosure is executed by an image forming system including an image forming apparatus for executing a print job held in a print server and associated with a first user of the print server, and includes a login step, a reception step, and an association step. In the login step, a second user of the image forming apparatus is logged in the image forming apparatus. In reception step, an input operation of inputting account information of the first user is received while the second user is logged in the image forming apparatus. In the association step, the first user corresponding to the account information input by the input operation is associated with the second user logged in the image forming apparatus.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image forming system according to an embodiment of the present disclosure.
FIG. 2 is a block diagram showing a configuration of an information processing apparatus of the image forming system according to the embodiment of the present disclosure.
FIG. 3 is a block diagram showing a configuration of a print server of the image forming system according to the embodiment of the present disclosure.
FIG. 4 is a block diagram showing a configuration of an image forming apparatus of the image forming system according to the embodiment of the present disclosure.
FIG. 5 is a flowchart showing an example of association processing executed in the image forming system according to the embodiment of the present disclosure.
FIG. 6 is a flowchart showing an example of print job execution processing executed in the image forming system according to the embodiment of the present disclosure.

### DETAILED DESCRIPTION

An embodiment of the present disclosure will be described below with reference to the accompanying drawings. It is noted that the following embodiment is an example of embodying the present disclosure and does not limit the technical scope of the present disclosure.

### [Configuration of Image Forming System 100]

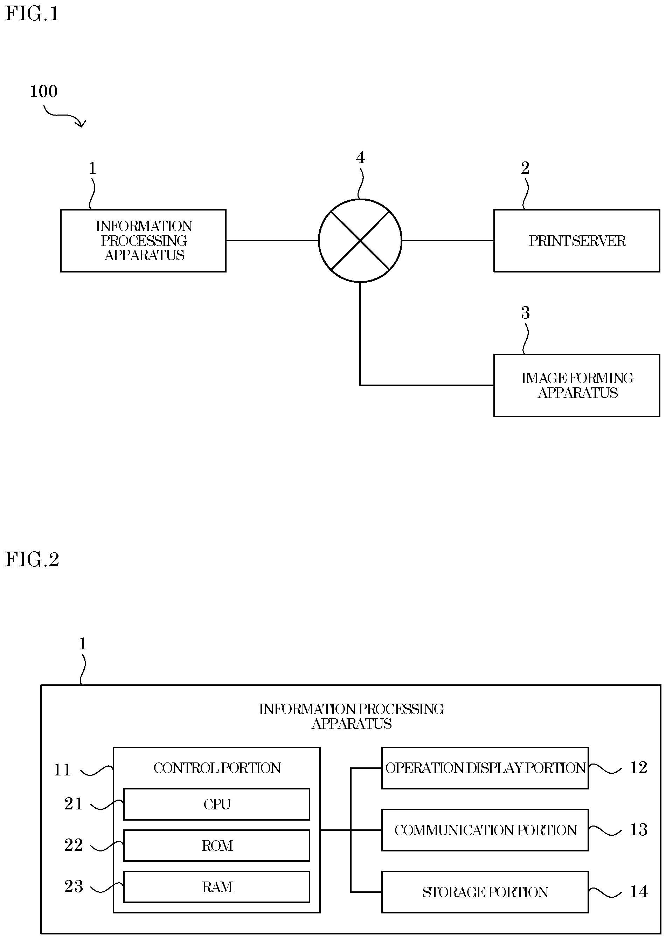

First, a configuration of an image forming system 100 according to the embodiment of the present disclosure will be described with reference to FIG. 1.

As shown in FIG. 1, the image forming system 100 includes an information processing apparatus 1, a print server 2, and an image forming apparatus 3. In the image forming system 100, the information processing apparatus 1, the print server 2, and the image forming apparatus 3 are each connected to a communication network 4. Two of the information processing apparatus 1, the print server 2, and the image forming apparatus 3 can communicate with each other via the communication network 4. For example, the communication network 4 is the Internet. The print server 2 and the image forming apparatus 3 are an example of the image forming system of the present disclosure.

### [Configuration of Information Processing Apparatus 1]

Next, a configuration of the information processing apparatus 1 will be described with reference to FIG. 2.

The information processing apparatus 1 is a client terminal used by a first user of the print server 2. The first user is a user of the print service provided by the print server 2. In addition, the first user is a user registered in advance in the print server 2 as a user of the print service. The print service is a service for using the image forming apparatus 3 to print image data designated by the first user. For example, the information processing apparatus 1 is a personal computer or a notebook computer. It is noted that the information processing apparatus 1 may be a smartphone, a tablet terminal, or the like.

As shown in FIG. 2, the information processing apparatus 1 includes a control portion 11, an operation display portion 12, a communication portion 13, and a storage portion 14.

The control portion 11 comprehensively controls the information processing apparatus 1. As shown in FIG. 2, the control portion 11 includes a CPU 21, a ROM 22, and a RAM 23. The CPU 21 is a processor that executes various types of arithmetic processing. The ROM 22 is a nonvolatile storage device in which information such as control programs for causing the CPU 21 to execute various types of processing are stored in advance. The RAM 23 is a volatile or nonvolatile storage device used as a temporary storage memory (work area) for various types of processing executed by the CPU 21. The CPU 21 executes various control programs stored in the ROM 22 in advance. The CPU 21 thereby performs overall control of the information processing apparatus 1.

The operation display portion 12 is a user interface of the information processing apparatus 1. The operation display portion 12 includes a first display portion and a first operation portion. The first display portion displays various types of information in response to control instructions from the control portion 11. For example, the first display portion is a flat panel display such as a liquid crystal display. The first operation portion inputs various types of information to the control portion 11 in response to user operations. For example, the first operation portion includes a keyboard, a mouse, and a touch panel.

The communication portion 13 is a communication interface for performing wired or wireless data communication with an external communication device, such as the print server 2, via the communication network 4.

The storage portion 14 is a nonvolatile storage device. For example, the storage portion 14 is a storage device such as a nonvolatile memory such as a flash memory, a solid state drive (SSD), a hard disk drive (HDD), and the like.

### [Configuration of Print Server 2]

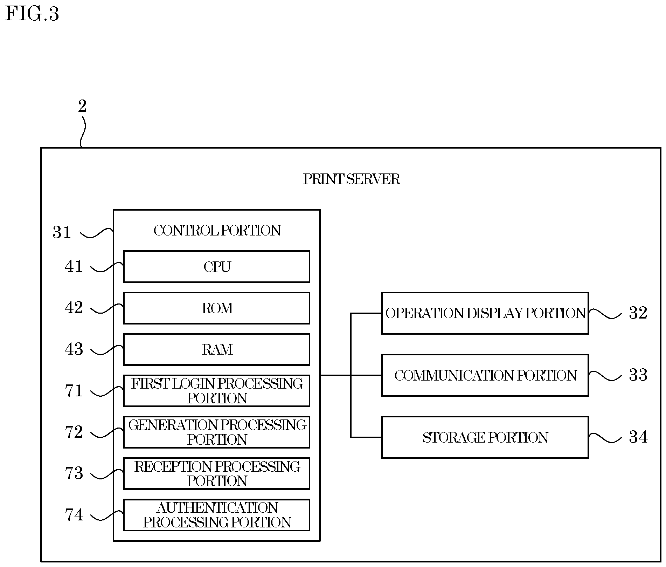

Next, a configuration of the print server 2 will be described with reference to FIG. 3.

The print server 2 is one or more information processing apparatuses that provide the print service to the first user. Herein, for convenience of description, an example in which the print server 2 is configured by one information processing apparatus will be described.

As shown in FIG. 3, the print server 2 includes a control portion 31, an operation display portion 32, a communication portion 33, and a storage portion 34.

The control portion 31 performs overall control of the print server 2. As shown in FIG. 3, the control portion 31 includes a CPU 41, a ROM 42, and a RAM 43. The CPU 41, the ROM 42, and the RAM 43 have functions similar to those of the CPU 21, the ROM 22, and the RAM 23 of the information processing apparatus 1.

The operation display portion 32 is a user interface of the print server 2. The operation display portion 32 includes a second display portion and a second operation portion. The second display portion displays various types of information in response to control instructions from the control portion 31. For example, the second display portion is a flat panel display such as a liquid crystal display. The second operation portion inputs various types of information to the control portion 31 in response to user operations. For example, the second operation portion includes a keyboard, a mouse, and a touch panel.

The communication portion 33 is a communication interface for performing wired or wireless data communication with external communication devices such as the information processing apparatus 1 and the image forming apparatus 3 via the communication network 4.

The storage portion 34 is a nonvolatile storage device similar to the storage portion 14 of the information processing apparatus 1.

First account information corresponding to each of the first users is stored in the storage portion 34 in advance. The first account information includes identification information of the first user such as a user ID, and a password.

In addition, the storage portion 34 stores, in advance, a first print service program for providing the print service to the first user. The CPU 41 of the control portion 31 executes the first print service program to function as a first login processing portion 71 and a generation processing portion 72 shown in FIG. 3.

The first login processing portion 71 causes the first user to log in the print server 2.

Specifically, the first login processing portion 71 causes the operation display portion 12 of the information processing apparatus 1 to display a first authentication screen used for authentication of the first user in response to a user operation instructing an access to the print server 2 on the operation display portion 12. On the first authentication screen, a user operation of inputting identification information of the first user and a password is received. When information is input by the user operation on the first authentication screen, the first login processing portion 71 determines whether or not the input information matches any of the first account information stored in the storage portion 34. When the information input on the first authentication screen matches any of the first account information stored in the storage portion 34, the first login processing portion 71 determines that the authentication is successful and causes the first user to log in the print server 2.

The generation processing portion 72 generates a print job for printing image data designated by the first user. The print job is a job to be executed by the image forming apparatus 3.

Specifically, the generation processing portion 72 causes the operation display portion 12 of the information processing apparatus 1 to display a print target designation screen used to designate image data to be printed, in response to a predetermined operation performed by the first user on the operation display portion 12. When the image data to be printed is designated by the operation performed by the first user on the print target designation screen, the generation processing portion 72 generates the print job for printing the designated image data. In addition, the generation processing portion 72 associates the generated print job with the first user who has designated the image data to be printed. In addition, the generation processing portion 72 stores the generated print job in the storage portion 34.

### [Configuration of Image Forming Apparatus 3]

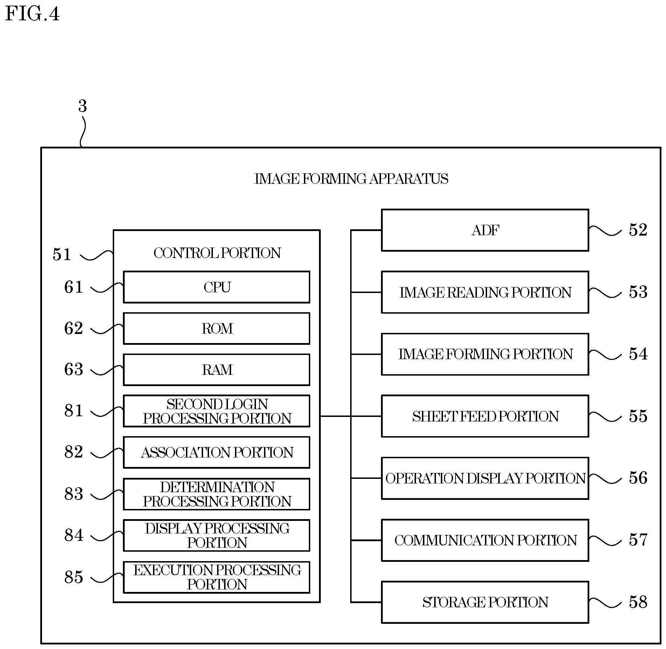

Next, a configuration of the image forming apparatus 3 will be described with reference to FIG. 4.

The image forming apparatus 3 executes the print job held in the print server 2. Specifically, the image forming apparatus 3 is a multi-functional peripheral having a print function of forming an image on a sheet based on image data, and a plurality of other functions such as a scan function, a facsimile function, and a copy function. It is noted that the image forming apparatus 3 may be a printer, a facsimile machine, a copier, or the like which has the print function.

As shown in FIG. 4, the image forming apparatus 3 includes a control portion 51, an automatic document feeder (ADF) 52, an image reading portion 53, an image forming portion 54, a sheet feed portion 55, an operation display portion 56, a communication portion 57, and a storage portion 58.

The control portion 51 performs overall control of the image forming apparatus 3. As shown in FIG. 4, the control portion 51 includes a CPU 61, a ROM 62, and a RAM 63. The CPU 61, the ROM 62, and the RAM 63 have functions similar to those of the CPU 21, the ROM 22, and the RAM 23 of the information processing apparatus 1.

The ADF 52 conveys a document sheet whose image is read by the image reading portion 53. The ADF 52 includes a document sheet loading portion, a plurality of conveying rollers, a document sheet holder, and a sheet discharge portion.

The image reading portion 53 implements the scan function. The image reading portion 53 includes a document sheet table, a light source, a plurality of mirrors, an optical lens, and a CCD.

The image forming portion 54 implements the print function. For example, the image forming portion 54 forms a color or monochrome image on a sheet supplied by the sheet feed portion 55, using an electrophotographic method. For example, the image forming portion 54 includes a plurality of image forming units, a laser scanning unit, an intermediate transfer belt, a secondary transfer roller, a fixing device, and a sheet discharge tray. It is noted that the image forming portion 54 may form an image on a sheet supplied by the sheet feed portion 55, using another image forming method such as an inkjet method.

The sheet feed portion 55 supplies a sheet to the image forming portion 54. The sheet feed portion 55 includes a sheet feed cassette, a manual feed tray, and a plurality of conveying rollers.

The operation display portion 56 is a user interface of the image forming apparatus 3. The operation display portion 56 includes a third display portion and a third operation portion. The third display portion displays various types of information in response to control instructions from the control portion 51. For example, the third display portion is a flat panel display such as a liquid crystal display. The third operation portion inputs various types of information to the control portion 51 in response to user operations. For example, the third operation portion includes an operation key and a touch panel.

The communication portion 57 is a communication interface for performing wired or wireless data communication with external communication devices such as the print server 2 via the communication network 4.

The storage portion 58 is a nonvolatile storage device similar to the storage portion 14 of the information processing apparatus 1.

Second account information corresponding to each of second users of the image forming apparatus 3 is stored in the storage portion 58 in advance. The second user is a user registered in the image forming apparatus 3 in advance as a user of the image forming apparatus 3. The second account information includes identification information of the second user such as a user ID, and a password.

In addition, an authentication program for authenticating the second user is stored in the storage portion 58 in advance. The CPU 61 of the control portion 51 executes the authentication program to function as a second login processing portion 81 shown in FIG. 4.

The second login processing portion 81 causes the second user to log in the image forming apparatus 3. The second login processing portion 81 is an example of the login processing portion of the present disclosure.

Specifically, the second login processing portion 81 causes the operation display portion 56 to display a second authentication screen used to authenticate the second user in response to a predetermined user operation on the operation display portion 56. On the second authentication screen, a user operation of inputting identification information of the second user and a password is received. When information is input by the user operation on the second authentication screen, the second login processing portion 81 determines whether or not the input information matches any of the second account information stored in the storage portion 58. When the information input on the second authentication screen matches any of the second account information stored in the storage portion 58, the second login processing portion 81 determines that the authentication is successful and causes the second user to log in the image forming apparatus 3.

By the way, an image forming apparatus capable of causing a display portion to display a print job of a user who has logged in the image forming apparatus as an execution target candidate among the print jobs held in the print server 2 is known as a related art.

However, in the image forming apparatus according to the related art described above, when the identification information of the first user associated with the print job is different from the identification information of the user of the image forming apparatus, the print job corresponding to the user who has logged in the image forming apparatus cannot be identified among the print jobs held in the print server 2.

On the other hand, in the image forming system 100 according to the embodiment of the present disclosure, as will be described below, among the print jobs held in the print server 2, the print job corresponding to the second user who has logged in the image forming apparatus 3 can be identified.

Specifically, the control portion 31 of the print server 2 includes a reception processing portion 73 and an authentication processing portion 74 shown in FIG. 3. The CPU 41 of the control portion 31 executes the first print service program to function as the reception processing portion 73 and the authentication processing portion 74.

In addition, the storage portion 58 of the image forming apparatus 3 stores in advance a second print service program for causing the control portion 51 to function as an association processing portion 82, a determination processing portion 83, a display processing portion 84, and an execution processing portion 85 shown in FIG. 4. The CPU 61 of the control portion 51 executes the second print service program to function as the aforementioned processing portions.

It is noted that some or all of the processing portions included in the control portion 31 of the print server 2 may be constituted by electronic circuits. In addition, the first print service program may be a program for causing a plurality of processors to function as the processing portions shown in FIG. 3.

In addition, some or all of the processing portions included in the control portion 51 of the image forming apparatus 3 may be constituted by electronic circuits. In addition, the authentication program and the second print service program may be a program for causing a plurality of processors to function as the processing portions shown in FIG. 4.

The reception processing portion 73 receives an input operation of inputting the first account information (an example of the account information of the present disclosure) of the first user while the second user is logged in the image forming apparatus 3.

For example, the control portion 51 of the image forming apparatus 3 requests the print server 2 to authenticate the first user in accordance with a predetermined authentication method in response to a predetermined operation performed by the second user on the operation display portion 56.

For example, the authentication method is OAuth2.0. In this case, the control portion 51 requests the print server 2 to grant an access right to the resource of the first user in the print server 2.

The reception processing portion 73 causes the operation display portion 56 to display an input screen used for the input operation when the authentication of the first user according to the authentication method is requested from the control portion 51 of the image forming apparatus 3.

It is noted that the reception processing portion 73 may cause the operation display portion 56 to display access information such as a URL for displaying the input screen, instead of displaying the input screen. In this case, the reception processing portion 73 may cause the display portion of the terminal device such as a smartphone, from which the access information has been input, to display the input screen.

The authentication processing portion 74 authenticates the first user based on the first account information input by the input operation.

Specifically, when the input operation is received on the input screen, the authentication processing portion 74 determines whether or not the information input by the input operation matches any of the first account information stored in the storage portion 34. The authentication processing portion 74 then determines that the authentication is successful when the information input by the input operation matches any of the first account information stored in the storage portion 34.

When the authentication processing portion 74 determines that the authentication is successful, the authentication processing portion 74 notifies the image forming apparatus 3 to that effect. For example, the authentication processing portion 74 transmits an access token for accessing the resource of the first user in the print server 2 to the image forming apparatus 3.

The association processing portion 82 associates the first user corresponding to the first account information input by the input operation with the second user logged in the image forming apparatus 3.

For example, when the first user is authenticated by the authentication processing portion 74, the association processing portion 82 associates the first user with the second user.

For example, when the access token is transmitted from the print server 2, the association processing portion 82 extracts the identification information of the first user included in the access token and stores the extracted identification information of the first user in the storage portion 58 in association with the identification information of the second user. The access token transmitted from the print server 2 may be discarded after the identification information of the first user is extracted.

When a display operation instructing display of the print job held in the print server 2 is received at the image forming apparatus 3 which the second user is logged in, the determination processing portion 83 determines whether or not the second user logged in the image forming apparatus 3 is associated with the first user.

When the determination processing portion 83 determines that the second user is associated with the first user, the display processing portion 84 causes the operation display portion 56 (an example of the display portion of the present disclosure) to display, as an execution target candidate, a specific print job corresponding to the first user associated with the second user logged in the image forming apparatus 3 among the print jobs held in the print server 2.

In addition, when the determination processing portion 83 determines that the second user is not associated with the first user, the display processing portion 84 does not cause the operation display portion 56 to display the print job held in the print server 2.

For example, when the determination processing portion 83 determines that the second user is not associated with the first user, the display processing portion 84 causes the operation display portion 56 to display an error screen including a message indicating that the print job corresponding to the second user cannot be displayed.

The execution processing portion 85 executes a specific print job designated by the second user among the specific print jobs displayed as execution target candidates by the display processing portion 84.

For example, in the image forming apparatus 3, the number of sheets that can be printed in a predetermined reference period, such as one month, is set for each of the second users.

The execution processing portion 85 then executes the specific print job designated by the second user when the cumulative number of sheets printed in the reference period of the second user after execution of the specific print job designated by the second user does not exceed the number of sheets that can be printed corresponding to the second user. In addition, the execution processing portion 85 does not execute the specific print job designated by the second user when the cumulative number of sheets printed in the reference period of the second user after execution of the specific print job designated by the second user exceeds the number of sheets that can be printed corresponding to the second user.

### [Association Processing]

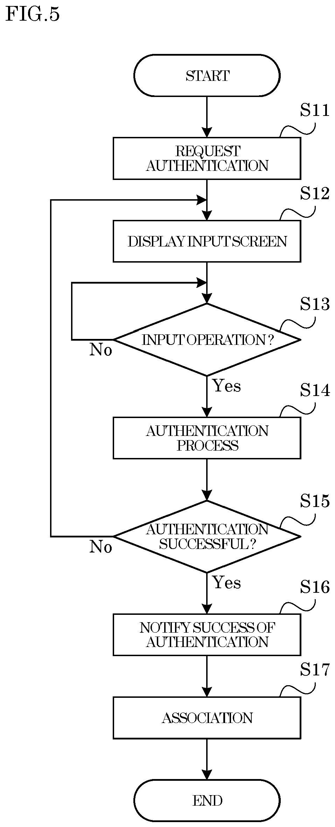

The information processing method of the present disclosure will be described below with reference to FIG. 5, along with an example of the procedure of the association processing executed by the control portion 31 of the print server 2 and the control portion 51 of the image forming apparatus 3. Here, steps S11, S12, ... represent the numbers of the processing procedure (steps) executed by the control portion 31 or the control portion 51.

For example, the association processing is executed when an operation of the second user instructing execution of the association processing is received at the image forming apparatus 3 which the second user is logged in. It is noted that the process of causing the second user to log in the image forming apparatus 3 is an example of the login step of the present disclosure, and is executed by the second login processing portion 81 of the control portion 51.

### <Step S11>

First, in step S11, the control portion 51 requests the print server 2 to authenticate the first user in accordance with the authentication method.

For example, the control portion 51 requests the print server 2 to grant an access right to the resource of the first user in the print server 2 in accordance with OAuth2.0.

### <Step S12>

In step S12, the control portion 31 causes the operation display portion 56 of the image forming apparatus 3 to display the input screen used for the input operation of inputting the first account information. Here, the process of step S12 is an example of the reception step of the present disclosure, and is executed by the reception processing portion 73 of the control portion 31.

### <Step S13>

In step S13, the control portion 31 determines whether or not the input operation has been received on the input screen.

Here, when the control portion 31 determines that the input operation has been received (Yes in S13), the control portion 31 shifts the processing to step S14. In addition, when the input operation has not been received (No in S13), the control portion 31 waits for receipt of the input operation in step S13.

### <Step S14>

In step S14, the control portion 31 executes an authentication process of authenticating the first user based on the first account information input by the input operation. The process of step S14 is executed by the authentication processing portion 74 of the control portion 31.

### <Step S15>

In step S15, the control portion 31 determines whether or not the authentication process executed in step S14 is successful.

Here, when the control portion 31 determines that the authentication process is successful (Yes in S15), the control portion 31 shifts the processing to step S16. In addition, when the authentication process is not successful (No in S15), the control portion 31 shifts the processing to step S12.

### <Step S16>

In step S16, the control portion 31 notifies the image forming apparatus 3 of the success of the authentication.

For example, the control portion 31 transmits the access token for accessing the resource of the first user in the print server 2 to the image forming apparatus 3 in accordance with OAuth2.0.

### <Step S17>

In step S17, the control portion 51 associates the first user corresponding to the first account information input by the input operation with the second user logged in the image forming apparatus 3. The process of step S17 is an example of the association step of the present disclosure, and is executed by the association processing portion 82 of the control portion 51.

For example, the control portion 51 extracts the identification information of the first user included in the access token transmitted from the print server 2, and stores the extracted identification information of the first user in the storage portion 58 in association with the identification information of the second user. In addition, the control portion 51 discards the access token after extracting the identification information of the first user included in the access token.

### [Print Job Execution Processing]

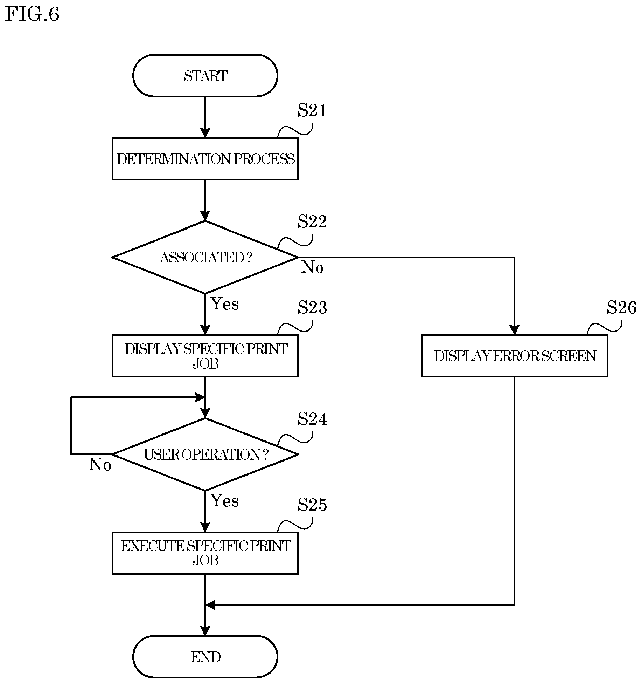

Next, an example of the procedure of print job execution processing executed by the control portion 51 of the image forming apparatus 3 will be described with reference to FIG. 6. For example, the print job execution processing is executed when the display operation instructing display of the print job held in the print server 2 is received at the image forming apparatus 3 which the second user is logged in.

### <Step S21>

First, in step S21, the control portion 51 determines whether or not the second user logged in the image forming apparatus 3 is associated with the first user. Here, the process of step S21 is executed by the determination processing portion 83 of the control portion 51.

### <Step S22>

In step S22, the control portion 51 branches the processing in accordance with the result of the process of step S21. Specifically, when it is determined in the process of step S21 that the second user is associated with the first user (Yes in S22), the control portion 51 shifts the processing to step S23. In addition, when it is determined in the process of step S21 that the second user is not associated with the first user (No in S22), the control portion 51 shifts the processing to step S26.

### <Step S23>

In step S23, the control portion 51 causes the operation display portion 56 to display, as an execution target candidate, the specific print job corresponding to the first user associated with the second user logged in the image forming apparatus 3 among the print jobs held in the print server 2. The process of step S23 is executed by the display processing portion 84 of the control portion 51.

Specifically, the control portion 51 acquires from the print server 2 job information of each of the print jobs stored in the storage portion 34 of the print server 2. In addition, the control portion 51 identifies the job information of the specific print job included in the acquired job information. Then, the control portion 51 causes the operation display portion 56 to display a job list in which the job information of the identified specific print job is enumerated.

### <Step S24>

In step S24, the control portion 51 determines whether or not an operation of the second user designating one or more of the specific print jobs displayed in the process of step S23 has been received.

Here, when the control portion 51 determines that the operation of the second user designating one or more of the specific print jobs has been received (Yes in S24), the control portion 51 shifts the processing to step S25. In addition, when the operation of the second user designating one or more of the specific print jobs has not been received (No in S24), the control portion 51 waits for the operation of the second user designating one or more of the specific print jobs in step S24.

### <Step S25>

In step S25, the control portion 51 executes each of the specific print jobs designated by the second user. The process of step S25 is executed by the execution processing portion 85 of the control portion 51.

Specifically, the control portion 51 acquires each of the specific print jobs designated by the second user from the storage portion 34 of the print server 2. Then, the control portion 51 sequentially executes the acquired specific print jobs.

It is noted that the control portion 51 does not have to execute the specific print job designated by the second user when the cumulative number of sheets printed in the reference period of the second user after execution of the specific print job designated by the second user exceeds the number of sheets that can be printed corresponding to the second user.

### <Step S26>

In step S26, the control portion 51 causes the operation display portion 56 to display the error screen. The process of step S26 is executed by the display processing portion 84 of the control portion 51.

As described above, in the image forming system 100, the input operation of inputting the first account information is received while the second user is logged in the image forming apparatus 3. Then, the first user corresponding to the first account information input by the input operation is associated with the second user logged in the image forming apparatus 3. Thus, among the print jobs held in the print server 2, the print job corresponding to the second user who has logged in the image forming apparatus 3 can be identified.

In addition, in the image forming system 100, when the first user is authenticated based on the first account information input by the input operation and the authentication is successful, the first user is associated with the second user. Thus, impersonation of the first user by a third party can be suppressed, compared to a configuration that only receives identification information of the first user and associates the received identification information of the first user with the second user.

In addition, in the image forming system 100, when the display operation is received and it is determined that the second user logged in the image forming apparatus 3 is associated with the first user, the specific print job among the print jobs held in the print server is displayed as an execution target candidate. This saves the second user from having to search for the print job corresponding to the second user, compared to the configuration in which all the print jobs held in the print server 2 are always displayed when the display operation is received.

In addition, in the image forming system 100, when the display operation is received and it is determined that the second user logged in the image forming apparatus 3 is not associated with the first user, the error screen is displayed. Thus, when it is determined that the second user logged in the image forming apparatus 3 is not associated with the first user, execution of the print job by a third party different from the first user can be suppressed, compared to the configuration in which all the print jobs held in the print server 2 are displayed.

It is noted that the account information of the present disclosure may be identification information of the first user. In other words, the input operation may be an operation of inputting only the identification information of the first user. In this case, the control portion 31 of the print server 2 does not have to include the authentication processing portion 74. In addition, the reception processing portion 73 may be provided in the control portion 51 of the image forming apparatus 3. The image forming apparatus 3 including the reception processing portion 73 is another example of the image forming system of the present disclosure.

In addition, when the display operation is received and it is determined that the second user logged in the image forming apparatus 3 is not associated with the first user, the display processing portion 84 may cause all the print jobs held in the print server 2 to be displayed.

In addition, when the display operation is received, the display processing portion 84 may cause all the print jobs held in the print server 2 to be displayed. In this case, the execution processing portion 85 may restrict the execution of the print job different from the specific print job among the displayed print jobs.

### [Appendixes of Invention]

The following are appendixes to the overview of the invention extracted from the above embodiment. It is noted that the structures and processing functions to be described in the following appendixes can be selected and combined arbitrarily.

### <Appendix 1>

An image forming system comprising: an image forming apparatus configured to execute a print job held in a print server and associated with a first user of the print server; a login processing portion configured to cause a second user of the image forming apparatus to log in the image forming apparatus; a reception processing portion configured to receive an input operation of inputting account information of the first user while the second user is logged in the image forming apparatus; and an association processing portion configured to associate the first user corresponding to the account information input by the input operation with the second user logged in the image forming apparatus.

### <Appendix 2>

The image forming system according to Appendix 1, wherein
the account information includes identification information of the first user and a password, the image forming system includes an authentication processing portion configured to authenticate the first user based on the account information input by the input operation, and when the first user is authenticated by the authentication processing portion, the association processing portion associates the first user with the second user.

### <Appendix 3>

The image forming system according to Appendix 1 or 2, further comprising: a determination processing portion configured to determine whether or not the second user logged in the image forming apparatus is associated with the first user when a display operation instructing display of the print job held in the print server is received at the image forming apparatus which the second user is logged in; and a display processing portion configured to cause a display portion to display, as an execution target candidate, a specific print job corresponding to the first user associated with the second user logged in the image forming apparatus among the print job held in the print server when the determination processing portion determines that the second user is associated with the first user.

### <Appendix 4>

The image forming system according to Appendix 3, wherein when the determination processing portion determines that the second user is not associated with the first user, the display processing portion refrains from causing the display portion to display the print job held in the print server.

### <Appendix 5>

An information processing method executed in an image forming system including an image forming apparatus for executing a print job held in a print server and associated with a first user of the print server, the information processing method comprising: a login step of causing a second user of the image forming apparatus to log in the image forming apparatus; a reception step of receiving an input operation of inputting account information of the first user while the second user is logged in the image forming apparatus; and an association step of associating the first user corresponding to the account information input by the input operation with the second user logged in the image forming apparatus.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming system (100) comprising:
an image forming apparatus (3) configured to execute a print job held in a print server (2) and associated with a first user of the print server (2);
a login processing portion (81) configured to cause a second user of the image forming apparatus (3) to log in the image forming apparatus (3);
a reception processing portion (73) configured to receive an input operation of inputting account information of the first user while the second user is logged in the image forming apparatus (3); and
an association processing portion (82) configured to associate the first user corresponding to the account information input by the input operation with the second user logged in the image forming apparatus (3).

2. The image forming system (100) according to claim 1, wherein
the account information includes identification information of the first user and a password,
the image forming system (100) includes an authentication processing portion (74) configured to authenticate the first user based on the account information input by the input operation, and
when the first user is authenticated by the authentication processing portion (74), the association processing portion (82) associates the first user with the second user.

3. The image forming system (100) according to claim 1 or 2, further comprising:
a determination processing portion (83) configured to determine whether or not the second user logged in the image forming apparatus (3) is associated with the first user when a display operation instructing display of the print job held in the print server (2) is received at the image forming apparatus (3) which the second user is logged in; and
a display processing portion (84) configured to cause a display portion (56) to display, as an execution target candidate, a specific print job corresponding to the first user associated with the second user logged in the image forming apparatus (3) among the print job held in the print server (2) when the determination processing portion (83) determines that the second user is associated with the first user.

4. The image forming system (100) according to claim 3, wherein
when the determination processing portion (83) determines that the second user is not associated with the first user, the display processing portion (84) refrains from causing the display portion (56) to display the print job held in the print server (2).

5. An information processing method executed in an image forming system (100) including an image forming apparatus (3) for executing a print job held in a print server (2) and associated with a first user of the print server (2), the information processing method comprising:
a login step of causing a second user of the image forming apparatus (3) to log in the image forming apparatus (3);
a reception step of receiving an input operation of inputting account information of the first user while the second user is logged in the image forming apparatus (3); and
an association step of associating the first user corresponding to the account information input by the input operation with the second user logged in the image forming apparatus (3).
